(19)

Europäisches
Patentamt
European
Patent Office
Office européen
des brevets

(11) **EP 4 435 962 A1**

(12) **EUROPEAN PATENT APPLICATION**
published in accordance with Art. 153(4) EPC

(43) Date of publication:
**25.09.2024 Bulletin 2024/39**

(21) Application number: **23864124.5**

(22) Date of filing: **19.01.2023**

(51) International Patent Classification (IPC):
**H01M 50/588** (2021.01)    **H01M 50/593** (2021.01)

(86) International application number:
**PCT/CN2023/073104**

(87) International publication number:
**WO 2024/152293 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited**
**Ningde City, Fujian 352100 (CN)**

(72) Inventors:
• **KE, Haibo**
**Ningde**
**Fujian 352100 (CN)**
• **CHEN, Yanlin**
**Ningde**
**Fujian 352100 (CN)**

• **LI, Quankun**
**Ningde**
**Fujian 352100 (CN)**
• **YANG, Kaihuan**
**Ningde**
**Fujian 352100 (CN)**
• **YU, Fan**
**Ningde**
**Fujian 352100 (CN)**
• **WANG, Peng**
**Ningde**
**Fujian 352100 (CN)**

(74) Representative: **Thoma, Michael**
**Lorenz Seidler Gossel**
**Rechtsanwälte Patentanwälte**
**Partnerschaft mbB**
**Widenmayerstraße 23**
**80538 München (DE)**

(54) **BATTERY CELL, BATTERY AND ELECTRICAL APPARATUS**

(57)    This application discloses a battery cell (10), a battery, and an electric apparatus. The battery cell (10) includes a housing (100) and a barrier member (130). The housing (100) has an inner cavity, the housing (100) has a first wall (121), and a weak portion (400) is provided on the first wall (121). The barrier member (130) is arranged in the inner cavity of the housing (100), and the barrier member (130) is provided on at least part of the periphery of the weak portion (400). In the battery cell (10) of this application, the barrier member (130) blocks at least part of the weak portion (400) from the side of the inside of the housing (100), thereby preventing the electrolyte from continuing to flow from a position at which the barrier member (130) is located to a position close to the weak portion (400), reducing the contact between the electrolyte and the weak portion (400), and providing better protection for the weak portion (400).

FIG. 4

EP 4 435 962 A1

# Description

## TECHNICAL FIELD

This application relates to the field of batteries, and specifically relates to a battery cell, a battery, and an electric apparatus.

## BACKGROUND

As people pay more attention to the environmental protection, electric vehicles are rapidly emerging within the vehicle industry due to their energy-saving and environmentally friendly advantages. In electric vehicles, the battery is used as the power supply device, and the explosion-proof structure is provided within the battery. In some cases, the electrolyte flows onto the surface of the explosion-proof structure, eroding the explosion-proof structure, thereby reducing the service life of the explosion-proof structure.

## TECHNICAL PROBLEMS

One of the objectives of the embodiments of this application is to provide a battery cell, a battery, and an electric apparatus so as to solve the problem of the reduction in service life caused by erosion of the explosion-proof structure by the electrolyte to a certain extent.

## TECHNICAL SOLUTION

The following technical solutions are used in the embodiments of this application.
According to a first aspect, this application provides a battery cell including:

a housing, where the housing has an inner cavity, the housing has a first wall, and a weak portion is provided on the first wall; and
a barrier member, where the barrier member is located in the inner cavity of the housing, and the barrier member is provided on at least part of the periphery of the weak portion.

In this technical solution of the embodiments of this application, the weak portion is configured for pressure relief, and under the condition that temperature or pressure in the inner cavity of the housing reaches a threshold, the weak portion breaks to enable the battery cell to achieve the pressure relief. The barrier member is provided inside the housing, and the barrier member is provided in the peripheral zone of the weak portion, such that the electrolyte flowing from a side of the barrier member away from the weak portion along a direction parallel to the first wall to the weak portion is blocked by the barrier member. Therefore, the provision of the barrier member can diminish the erosion of the electrolyte on at least part of the weak portion, thereby improving the protection effect on the weak portion, and alleviating or even solving the problem that the weak portion breaks due to erosion of the electrolyte to a certain extent.
In some embodiments, the barrier member is a closed annular structure.
In this arrangement, the barrier member blocks the periphery around the weak portion, such that the electrolyte flowing along the direction parallel to the first wall to the weak portion is better blocked and the weak portion is better protected.
In some embodiments, the battery cell includes an explosion-proof structure, where the weak portion is provided in the explosion-proof structure, the first wall has a mounting hole, the explosion-proof structure is mounted in the mounting hole, and the barrier member is provided at an edge of the mounting hole.
In this arrangement, the explosion-proof structure and the housing are separate structures, and the explosion-proof structure and the shell are manufactured separately to reduce the difficulty of manufacturing.
In some embodiments, the mounting hole includes a first hole section and a second hole section, where the first hole section is connected to a side of the second hole section closer to the inner cavity of the housing, a bore diameter of the first hole section is less than a bore diameter of the second hole section, the explosion-proof structure is mounted in the second hole section, and the barrier member is provided at an edge of the first hole section.
In this arrangement, the bore diameters of the first hole section and the second hole section are different such that a first mounting surface is formed between the first hole section and the second hole section. The first mounting surface facilitates mounting of the explosion-proof structure.
In some embodiments, the explosion-proof structure includes a valve sheet and a protection sheet, and the mounting hole further includes a third hole section. The third hole section is connected to a side of the second hole section away from the inner cavity of the housing, a bore diameter of the third hole section is greater than the bore diameter of the second hole section, the valve sheet is mounted to the second hole section, and the protection sheet is mounted to the third hole section.
In this arrangement, the bore diameters of the third hole section and the second hole section are different such that a second mounting surface is formed between the third hole section and the second hole section. The second mounting surface facilitates mounting of the protection sheet.
In some embodiments, the mounting hole further includes a fourth hole section. The fourth hole section is arranged between the second hole section and the third hole section, a bore diameter of the fourth hole section is greater than the bore diameter of the second hole section, and the bore diameter of the fourth hole section is less than the bore diameter of the third hole section.
In this arrangement, the fourth hole section is arranged between the third hole section and the second hole section, and the fourth hole section is such arranged that there is a certain gap between the third hole section and the second hole section. In this way, after the valve sheet is mounted in the second hole section and the protection sheet is mounted in the third hole section, there is a certain gap between the valve sheet and the protection sheet, such that the protection sheet can protect the valve sheet without affecting the structural strength of the valve sheet.

In some embodiments, the barrier member has a thickness of H1, where 0<H1<0.5 mm.

In this arrangement, the barrier member has a certain thickness such that the barrier member occupies relatively less space in the inner cavity while having a blocking effect.

In some embodiments, $0.1 \text{ mm} \leq H1 \leq 0.3 \text{ mm}$.

In this arrangement, the barrier member can better block the electrolyte.

In some embodiments, the barrier member has an inner wall and an outer wall in a direction parallel to the first wall, where the inner wall is arranged close to the weak portion, the outer wall is arranged opposite the inner wall, and a distance between the inner wall and the outer wall is L1, where 0<L1<7.5 mm.

In this arrangement, the barrier member has a certain structural strength to better block the electrolyte.

In some embodiments, $0.5 \text{ mm} \leq L1 \leq 2.5 \text{ mm}$.

In this arrangement, the barrier member has relatively stronger structural strength, relatively higher blocking effect, and relatively less material required for manufacturing.

In some embodiments, the barrier member and the housing are integrally molded.

In this arrangement, the barrier member is integrally molded with the housing, which facilitates manufacturing.

In some embodiments, the barrier member has an inner wall and an outer wall in a direction parallel to the first wall, where the inner wall is arranged close to the weak portion, and a distance between a hole wall of the second hole section and the inner wall of the barrier member in the direction parallel to the first wall is L2, where

$$0 < L2 < 7.5 \text{ mm}.$$

In this arrangement, with L2 in the foregoing range, the blocking of the weak portion in a direction perpendicular to the first wall by the barrier member can be reduced or even avoided, and it is easy for the explosion-proof structure to be installed in the second hole section.

In some embodiments, $1 \text{ mm} \leq L2 \leq 4 \text{ mm}$.

In some embodiments, the barrier member has an inner wall and an outer wall in a direction parallel to the first wall, where the inner wall is arranged close to the weak portion, the outer wall is arranged opposite the inner wall, and a distance between a hole wall of the second hole section and the outer wall is L3; where

> if the hole wall of the second hole section is arranged closer to the weak portion with respect to the outer wall,

$$0 < L3 \leq 2.5 \text{ mm};$$

> and
> if a distance between the hole wall of the second hole section and the weak portion is equal to a distance between the outer wall and the weak portion, or if the hole wall of the second hole section is arranged farther away from the weak portion with respect to the outer wall, 0≤L3<5 mm.

In this arrangement, with L3 in the foregoing range, it is convenient to manufacture the barrier member.

In some embodiments, if the hole wall of the second hole section is closer to the weak portion with respect to the outer wall, 0<L3<1 mm; and if a distance between the hole wall of the second hole section and the weak portion is equal to a distance between the outer wall and the weak portion, or if the hole wall of the second hole section is arranged farther away from the weak portion with respect to the outer wall, $0 \leq L3 \leq 2 \text{ mm}$.

In some embodiments, the battery cell further includes a cover body, where the cover body is provided in the inner cavity, and the cover body covers at least part of the weak portion along a thickness direction of the first wall.

In this arrangement, the cover body can block the electrolyte flowing along the thickness direction of the first wall to at least part of the weak portion, and in the direction parallel to the first wall, the barrier member can block the electrolyte flowing from the barrier member away from the weak portion to the weak portion, and the cover body and the barrier member are arranged cooperatively, so as to provide better protection for the weak portion.

In some embodiments, the cover body is connected to the barrier member and/or the first wall.

In this arrangement, the cover body occupies relatively little space within the inner cavity of the housing.

In some embodiments, the cover body is connected to a surface of the barrier member away from the first wall.

In this arrangement, the cover body is connected to the barrier member with a certain zone, which can block the electrolyte from flowing between the cover body and the barrier member to the weak portion.

In some embodiments, the cover body covers the entire weak portion.

In this arrangement, the cover body can block more electrolyte flowing along the thickness direction of the first wall to the weak portion, providing better protection for the weak portion.

In some embodiments, the weak portion encloses a pressure relief zone, and the cover body covers at least part of the pressure relief zone.

In this arrangement, the cover body has a relatively larger covering range and provides better protection for the weak portion.

In some embodiments, the cover body includes a substrate portion and a connection portion, where the substrate portion is connected to the barrier member and/or the first wall via the connection portion.

In this arrangement, the connection portion is configured to fix the substrate portion to the barrier member and/or the first wall, so as to facilitate the blocking of the weak portion by the substrate portion.

In some embodiments, the first wall has a recess, where the weak portion is provided on an inner wall of the recess, a gas passage is arranged between the cover body and the housing, and the gas passage is connected to the recess.

In this arrangement, the gas passage is provided to facilitate the connection of the cavity in the recess to the inner cavity of the housing, thereby facilitating helium detection.

In some embodiments, the first wall has a recess, where the weak portion is provided on an inner wall of the recess, a gas passage is arranged on the cover body and/or the housing, and the gas passage is connected to the recess.

In this arrangement, the gas passage is provided to facilitate the connection of the cavity in the recess to the inner cavity of the housing, thereby facilitating helium detection.

In some embodiments, the gas passage includes a first passage, and the cover body includes a substrate portion and a plurality of connection portions spaced apart on the substrate portion, where the first passage is formed between adjacent ones of the connection portions.

In this arrangement, the first passage is arranged on the cover body, and the first passage is enclosed by adjacent connection portions in the cover body.

In some embodiments, the gas passage includes a second passage, where the second passage runs through the cover body in a thickness direction of the cover body, and a projection of the second passage on the first wall falls outside the weak portion.

In this arrangement, the second passage is arranged on the cover body and is formed by a ventilation hole penetrating the cover body.

In some embodiments, a cell assembly is accommodated in the housing and the first wall is arranged below the cell assembly.

In this arrangement, the weak portion is arranged below the cell assembly, and the barrier member is provided in a direction parallel to the first wall in at least part of the peripheral zone of the weak portion, thereby preventing the electrolyte from coming into contact with at least part of the weak portion.

In some embodiments, the housing includes a shell and an end cover plate, where the end cover plate covers an opening of the shell, and the first wall is arranged on the end cover plate.

In some embodiments, the housing includes a shell and an end cover plate, where the end cover plate covers an opening of the shell, and the first wall is arranged on the shell.

According to a second aspect, this application provides a battery including the battery cell according to the foregoing embodiments.

Because the battery includes the foregoing battery cell, it includes at least all of the beneficial effects of the battery cell, which will not be repeated herein.

According to a third aspect, this application provides an electric apparatus including the battery in the foregoing embodiment, where the battery is configured to supply electrical energy.

Because the electric apparatus includes the foregoing battery, it includes at least all of the beneficial effects of the battery, which will not be repeated herein.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

## BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, same parts are denoted by same reference signs. In the accompanying drawings:

FIG. 1 is a first schematic structural exploded view of a battery cell according to some embodiments of this application;
FIG. 2 is a first schematic diagram of assembly of a housing and an explosion-proof structure in a battery cell according to some embodiments of this application;
FIG. 3 is a cross-sectional view of FIG. 2 along A-A;
FIG. 4 is a locally enlarged view of position B in FIG. 3;
FIG. 5 is a first schematic diagram of distribution of a barrier member on a first wall according to some embodiments of this application;
FIG. 6 is a second schematic diagram of distribution of a barrier member on a first wall according to some embodiments of this application;

FIG. 7 is a first schematic structural diagram of a shell according to some embodiments of this application;

FIG. 8 is a cross-sectional view of FIG. 7 along C-C;

FIG. 9 is a locally enlarged view of position D in FIG. 8;

FIG. 10 is a first locally cross-sectional view of a shell according to some embodiments of this application;

FIG. 11 is a second locally cross-sectional view of a shell according to some embodiments of this application;

FIG. 12 is a second schematic structural exploded view of a battery cell according to some embodiments of this application;

FIG. 13 is a second schematic structural diagram of a shell according to some embodiments of this application;

FIG. 14 is a cross-sectional view of FIG. 13 along E-E;

FIG. 15 is a locally enlarged view of position F in FIG. 14;

FIG. 16 is a schematic diagram of a relative position relation between a substrate portion and a connection portion in a cover body according to some embodiments of this application;

FIG. 17 is a first schematic structural exploded view of a cover body according to some embodiments of this application;

FIG. 18 is a second schematic structural exploded view of a cover body according to some embodiments of this application;

FIG. 19 is a third locally cross-sectional view of a shell according to some embodiments of this application; and

FIG. 20 is a schematic diagram of a relative position relation between a barrier member and a cover body on a first wall according to some embodiments of this application.

Reference signs in specific embodiments are as follows:
10. battery cell; 100. housing; 110. end cover assembly; 111. end cover plate; 112. pole; 120. shell; 121. first wall; 122. mounting hole; 1221. first hole section; 1222. second hole section; 1223. third hole section; 1224. fourth hole section; 130. barrier member; 131. inner wall; 132. outer wall; 133. top wall; 200. cell assembly; 210. cell body; 220. tab; 300. cover body; 310. substrate portion; 320. connection portion; 400. weak portion; 410. valve sheet; 420. protection sheet; 500. adapter sheet; 600. gas passage; 610. first passage; 620. second passage; and 630. third passage.

## DETAILED DESCRIPTION OF EMBODIMENTS OF THE PRESENT INVENTION

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "plurality" refers to more than two (including two).

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

As environmental pollution becomes increasingly serious, people's awareness of environmental protection has gradually increased, and the rapid rise of the new energy industry in this case has provided a broad space for the application and development of lithium-ion batteries. Lithium-ion batteries have the characteristics of high energy density, long cycle life, good charge and discharge rate performance, and the like. They have been widely used and chosen as power sources for more electric devices such as cell phones, laptops, electric tools, and electric vehicles. Generally, the lithium-ion batteries used in the above-mentioned electric devices are known as traction batteries. A traction battery typically includes a battery cell, the battery cell includes a housing and a cell assembly, the cell assembly is mounted inside the housing, the housing is provided with an explosion-proof structure (for example, an explosion-proof structure), and the explosion-proof structure is configured for relieving pressure in the battery when temperature or pressure inside the housing exceeds a threshold. The inventors have noted that when the explosion-proof structure is arranged below the cell assembly, after vibration and other situations occur, the free electrolyte inside the housing flows inside the housing, which erodes the explosion-proof structure. As a result, the electrolyte has a certain corrosive effect on the explosion-proof structure, and in the use of the battery, the electrolyte flows inside the housing and thus has certain erosion on the explosion-proof structure. Both of these two factors will reduce the service life of the explosion-proof structure.

Based on the above considerations, to solve the problem of the electrolyte having an adverse effect on the explosion-proof structure, the inventors, after indepth research, have designed a battery cell, in which a barrier member is provided on at least part of the inner side of the housing arranged in the peripheral zone of the explosion-proof structure, and the barrier member can play a certain blocking effect on the electrolyte flowing from a wall plate parallel to the housing and used for mounting the explosion-proof structure to the explosion-proof structure, so as to provide a certain degree of protection for the explosion-proof structure and to alleviate the adverse effect of the electrolyte on the explosion-proof structure.

The battery cell disclosed in the embodiments of this application can be used for electric apparatuses that use a battery as a power source or various energy storage systems that use a battery as an energy storage element.

In the embodiments of this application, the length direction, the width direction, and the thickness direction are the length direction, the width direction, and the height direction of the battery cell, and the battery cell is the smallest unit that constitutes the battery.

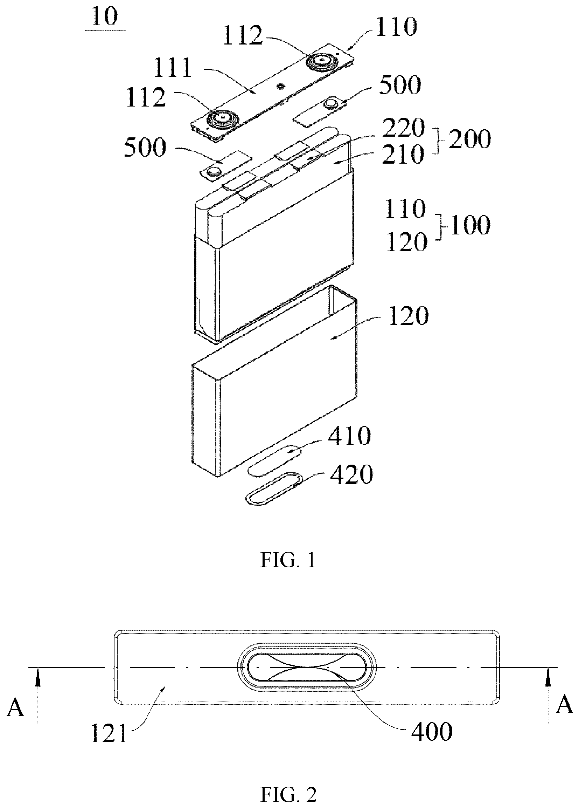

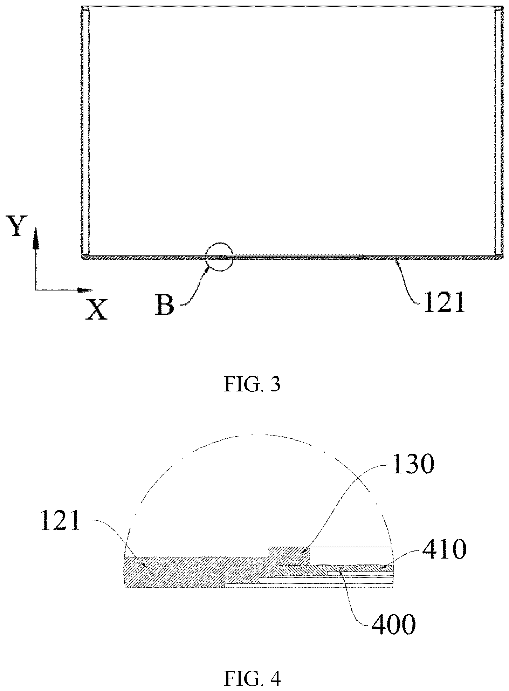

As shown in FIG. 1 to FIG. 4, a first aspect of the embodiments of this application provides a battery cell 10, where the battery cell 10 includes a housing 100 and a barrier member 130. The housing 100 has an inner cavity, the housing 100 has a first wall 121, and a weak portion 400 is provided on the first wall 121. The barrier member 130 is provided in the inner cavity, and the barrier member 130 is provided on at least part of the periphery of the weak portion 400.

The housing 100 is a structure for forming the inner cavity, and the inner cavity is used to accommodate other members of the battery cell 10. The first wall 121 is any wall of the housing 100, and may be a top wall, a bottom wall, or a side wall.

The weak portion 400 is provided on the first wall 121, the weak portion 400 is configured to break to achieve pressure relief of the battery cell 10 when temperature or pressure in the battery cell 10 exceeds a threshold. The weak portion 400 may be an indentation, a thinned portion, or an explosion-proof structural sheet mounted on the housing 100. The thinned portion is a zone that has a thickness less than thicknesses of other zones of the first wall 121.

The barrier member 130 is configured to enclose at least part of the peripheral zone of the weak portion 400. The barrier member 130 is provided in the inner cavity of the housing 100, such that the electrolyte flowing from a side of the barrier member 130 away from the weak portion 400 along a direction (direction X) parallel to the first wall 121 to the weak portion 400 is blocked by the barrier member 130. Therefore, the provision of the barrier member 130 can diminish the erosion of the electrolyte on at least part of the weak portion 400, thereby improving the protection effect on the weak portion 400, and alleviating or even solving the problem that the weak portion 400 breaks due to erosion of the electrolyte to a certain extent.

In some optional embodiments, the battery cell 10 further includes a cell assembly 200, and the housing 100 includes an end cover assembly 110 and a shell 120. The end cover assembly 110 includes an end cover plate 111, where the end cover plate 111 is a component that covers an opening of the shell 120 to insulate the inner cavity of the battery cell 10 from the external environment. The end cover assembly 110 further includes poles 112, where the pole 112 is configured to electrically connect to the cell assembly 200 to output or input electrical energy from the battery cell 10. The poles 112 include a positive pole and a negative pole, where the positive pole and the negative pole are spaced apart on the end cover plate 111 along a length direction of the battery cell.

The cell assembly 200 is a component of the battery cell 10 in which the electrochemical reaction occurs, and one or more cell assemblies 200 may be contained in the housing 100. The cell assembly 200 is formed primarily from a positive electrode plate and a negative electrode plate through winding or stacking, and a separator is typically provided between the positive electrode plate and the negative electrode plate. Parts of the positive electrode plate and the negative electrode plate with active substances constitute a cell body 210 of the cell assembly 200, while parts of the positive electrode plate and the negative electrode plate with no active substances separately constitute a tab 220. During charge and discharge of the battery, a positive electrode active substance and a negative electrode active substance react with an electrolyte, and the tabs 220 are electrically connected to the poles 112 to form a current loop. The tabs 220 include a positive tab and a negative tab, where the positive tab is configured to connect to the positive pole, and the negative tab is configured to connect to the negative pole.

The battery cell 10 further includes adapter sheets 500, where the positive tab is connected to the positive pole using one adapter sheet 500 and the negative tab is connected to the negative pole using the other adapter sheet 500.

In the housing 100, the weak portion 400 may be provided on the end cover plate 111 or on the shell 120, and specifically may be provided on a wall plate in the shell 120 opposite the end cover plate 111 or on another side wall of the shell 120.

In some embodiments, the weak portion 400 includes an indentation, where the indentation may be straight or curved. Such weak portion 400 breaks at the indentation when temperature or pressure in the battery cell 10 exceeds a threshold, so as to achieve pressure relief.

The barrier member 130 on the first wall 121 may be provided in one or more, and the cross section of the barrier member 130 in a direction parallel to the first wall 121 may be in a rectangular, circular, arc, annular, or another shape.

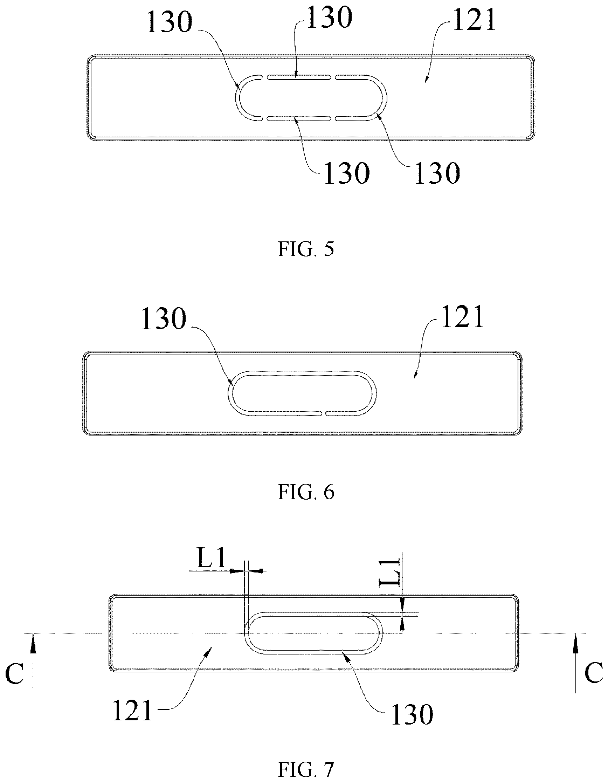

For example, as shown in FIG. 5, in one possible arrangement, a plurality of barrier members 130 are provided on the first wall 121, the plurality of barrier members 130 are spaced apart at the periphery of the weak portion 400, and the plurality of barrier members 130 may block an electrolyte flowing to the weak portion 400 in a plurality of directions at the periphery of the weak portion 400.

In one possible arrangement, as shown in FIG. 6, one barrier member 130 is provided on the first wall 121, and the barrier member 130 is annular with a notch. For example, the barrier member 130 may have a C-shaped or U-shaped structure. Such barrier member 130 has a larger blocking area on at least one side of the periphery of the weak portion 400, and has a better blocking effect on the electrolyte flowing to the weak portion 400 on that side.

In some embodiments, as shown in FIG. 7 to FIG. 9, the barrier member 130 is a closed annular structure, and the barrier member 130 may be a closed annular structure such as a circular ring, a polygonal ring, a waist-shaped ring, an elliptical ring, and a special-shaped ring. In this arrangement, the barrier member 130 is provided along the outside of the weak portion 400 for a complete circle to surround the weak portion 400 in the middle, such that the barrier member 130 can block the electrolyte flowing along a direction (direction X) parallel to the first wall 121 to the weak portion 400, so as to further reduce the erosion of the electrolyte on the weak portion 400, thereby further improving the protection effect on the weak portion 400.

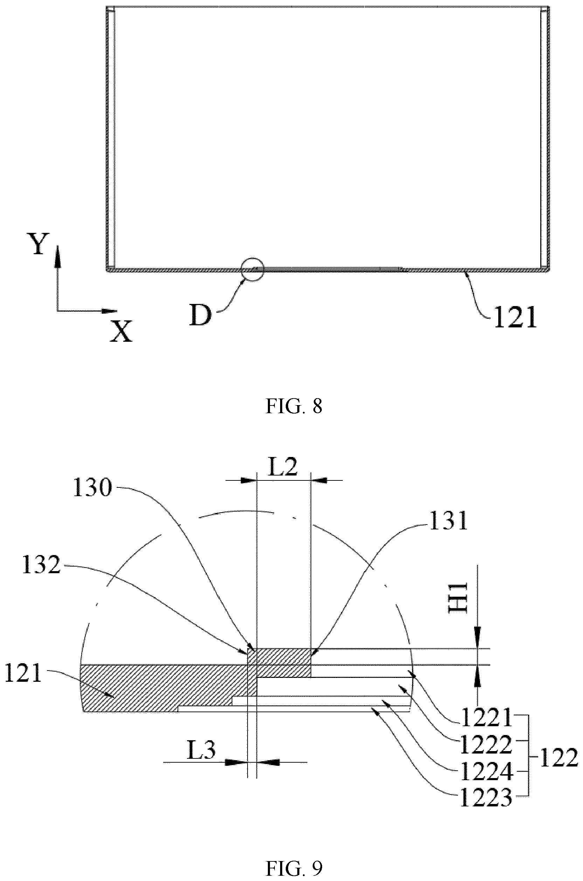

As shown in FIG. 9, in some embodiments, the battery cell 10 includes an explosion-proof structure, the weak portion 400 is provided in the explosion-proof structure, the first wall 121 has a mounting hole 122, the explosion-proof structure is mounted in the mounting hole 122, and the barrier member 130 is provided at an edge of the mounting hole 122. Alternatively, the barrier member 130 is provided in at least part of the peripheral zone of the mounting hole 122, and the barrier member 130 can block part of the electrolyte flowing along a direction (direction X) parallel to the first wall 121 to the mounting hole 122, to be specific, block part of the electrolyte flowing along the direction of the first wall 121 to the weak portion 400. In this arrangement, the explosion-proof structure and the housing 100 are separate structures, and the explosion-proof structure and the shell 120 are manufactured separately to reduce the difficulty of manufacturing.

Still referring to FIG. 9, in some embodiments, the mounting hole 122 includes a first hole section 1221 and a second hole section 1222. The first hole section 1221 is connected to a side of the second hole section 1222 closer to the inner cavity of the housing 100, a bore diameter of the first hole section 1221 is less than a bore diameter of the second hole section 1222, the explosion-proof structure is mounted in the second hole section 1222, and the barrier member 130 is provided at an edge of the first hole section 1221.

The mounting hole 122 may be a round hole, a square hole, a rectangular hole, an elliptical hole, a waist-shaped hole, or the like. When the mounting hole 122 is a round hole, the bore diameter of the mounting hole 122 is a diameter of the mounting hole 122. When the mounting hole 122 is a square hole, the bore diameter of the mounting hole 122 is a side length of the mounting hole 122. When the mounting hole 122 is a rectangular hole, the mounting hole 122 has a bore diameter in a long side direction and a bore diameter in a short side direction. When the mounting hole 122 is an elliptical hole or a waist-shaped hole, the mounting hole 122 has a bore diameter in a long axis direction and a bore diameter in a short axis direction.

The bore diameter of the second hole section 1222 is greater than the bore diameter of the first hole section 1221, in other words, an orthographic projection of the first hole section 1221 on the first wall 121 falls inside an orthographic projection of the second hole section 1222 on the first wall 121. When the mounting hole 122 is a round hole, both the first hole section 1221 and the second hole section 1222 are round holes, and the diameter of the second hole section 1222 is greater than the diameter of the first hole section 1221. When the mounting hole 122 is a square hole, a side length of the second hole section 1222 is greater than a side length of the first hole section 1221. When the mounting hole 122 is a rectangular hole, the bore diameter of the second hole section 1222 in a long side direction is greater than the bore diameter of the first hole section 1221 in a long side direction, and/or the bore diameter of the second hole section 1222 in a short side direction is greater than the bore diameter of the first hole section 1221 in a short side direction. When the mounting hole 122 is an elliptical hole or a waist-shaped hole, the bore diameter of the second hole section 1222 in a long axis direction is greater than the bore diameter of the first hole section 1221 in a long axis direction, and/or the bore diameter of the second hole section 1222 in a short axis direction is greater than the bore diameter of the first hole section 1221 in a short axis direction.

In this arrangement, the bore diameters of the first hole section 1221 and the second hole section 1222 are different such that a first mounting surface is formed between the first hole section 1221 and the second hole section 1222. In the second hole section 1222, a zone in which the orthographic projection of the second hole section 1222 on the first wall 121 does not coincide with the orthographic projection of the first hole section 1221 on the first wall 121 is the first mounting surface formed, the explosion-proof structure is restrained in the direction (direction X) parallel to the first wall 121 by the side wall of the second hole section 1222, and the explosion-proof structure is restrained in a thickness direction (direction Y) of the first wall 121 by the first mounting surface. The provision of the first mounting surface facilitates the mounting of the explosion-proof structure on the first wall 121 and increases the contact area between the first wall 121 and the explosion-proof structure.

The thickness direction (direction Y) of the first wall 121 is the normal direction of the first wall 121. If a direction (direction X) parallel to the first wall 121 is referred to as a first direction, the thickness direction (direction Y) of the first wall 121 is perpendicular to the first direction.

In some embodiments, the explosion-proof structure includes a valve sheet 410 and a protection sheet 420, and the mounting hole 122 further includes a third hole section 1223. The third hole section 1223 is connected to a side of the second hole section 1222 away from the inner cavity of the housing 100, a bore diameter of the third hole section 1223 is greater than the bore diameter of the second hole section 1222, the valve sheet 410 is mounted to the second hole section 1222, and the protection sheet 420 is mounted to the third hole section 1223. The weak portion 400 is provided on the valve sheet 410, the protection sheet 420 is configured to block the valve sheet 410 from the side of the valve sheet 410 away from the housing 100 so as to protect the valve sheet 410, and the protection sheet 420 can reduce or even avoid the contact between the electrolyte on the outside of the housing 100 and the valve sheet 410.

In this arrangement, the bore diameters of the second hole section 1222 and the third hole section 1223 are different such that a second mounting surface is formed between the second hole section 1222 and the third hole section 1223. In the third hole section 1223, a zone in which an orthographic projection of the third hole section 1223 on the first wall 121 does not coincide with the orthographic projection of the second hole section 1222 on the first wall 121 is the second mounting surface formed, the explosion-proof structure is restrained in the direction (direction X) parallel to the first wall 121 by the side wall of the third hole section 1223, and the explosion-proof structure is restrained in the thickness direction (direction Y) of the first wall 121 by the second mounting surface. The provision of the second mounting surface facilitates the mounting of the explosion-proof structure on the first wall 121 and increases the contact area between the first wall 121 and the explosion-proof structure. An adhesive tape may be provided in an edge zone of the protection sheet 420, and the protection sheet 420 is affixed to the second mounting surface through the adhesive tape.

In some embodiments, the mounting hole 122 further includes a fourth hole section 1224. The fourth hole section 1224 is arranged between the second hole section 1222 and the third hole section 1223, a bore diameter of the fourth hole section 1224 is greater than the bore diameter of the second hole section 1222, and the bore diameter of the fourth hole section 1224 is less than the bore diameter of the third hole section 1223. In this arrangement, the fourth hole section 1224 is arranged between the third hole section 1223 and the second hole section 1222, and the fourth hole section 1224 is such arranged that there is a certain gap between the third hole section 1223 and the second hole section 1222. In this way, after the valve sheet 410 is mounted in the second hole section 1222 and the protection sheet 420 is mounted in the third hole section 1223, there is a certain gap between the valve sheet 410 and the protection sheet 420, such that the protection sheet 420 can protect the valve sheet 410 without affecting the structural strength of the valve sheet 410.

As shown in FIG. 9, in some embodiments, the barrier member 130 has a thickness of H1, where 0<H1<0.5 mm. The thickness of the barrier member 130 is a dimension of the barrier member 130 in the thickness direction (direction Y) of the first wall 121. The barrier member 130 can have a uniform thickness structure, which means that the thickness is the same at all positions of the barrier member 130. The barrier member 130 may alternatively have a non-uniform thickness structure, which means that thicknesses of different zones of the barrier member 130 are not exactly equal. The thickness H1 of each of zones of the barrier member 130 satisfies 0<H1<0.5 mm. For example, H1 may be 0.05 mm, 0.1 mm, 0.12 mm, 0.15 mm, 0.18 mm, 0.2 mm, 0.25 mm, 0.28 mm, 0.3 mm, 0.32 mm, 0.35 mm, 0.38 mm, 0.4 mm, 0.45 mm, or 0.48 mm. When H1 is 0, the barrier member 130 is flush with the first wall 121, and in this case the barrier member 130 has no blocking effect on the weak portion 400; and when H1 is greater than or equal to 0.5 mm, the barrier member 130 occupies a relatively large space in the inner cavity, resulting in a reduction in the space occupied by another structure in the housing 100. When 0<H1<0.5 mm, the barrier member 130 has a thickness that enables the electrolyte flowing from the side of the barrier member 130 away from the weak portion 400 along the direction parallel to the first wall 121 to the weak portion 400 to be blocked by the barrier member 130, and the barrier member 130 occupies a relatively small space of the inner cavity in such a thickness range.

In some embodiments, 0.1 mm≤H1≤0.3 mm. For example, H1 may be 0.1 mm, 0.13 mm, 0.16 mm, 0.19 mm, 0.21 mm, 0.24 mm, 0.27 mm, or 0.3 mm.

In this arrangement, the barrier member 130 can better block the electrolyte.

As shown in FIG. 7, in some embodiments, the barrier member 130 has an inner wall 131 and an outer wall 132 in the direction (direction X) parallel to the first wall 121. The inner wall 131 is arranged close to the weak portion 400, the outer wall 132 is arranged opposite the inner wall 131, and a distance between the inner wall 131 and the outer wall 132 is L1, where 0<L1<7.5 mm. For example, L1 may be 0.3 mm, 0.55 mm, 1 mm, 1.5 mm, 1.8 mm, 2 mm, 2.5 mm, 3 mm, 3.5 mm, 3.8 mm, 4.1 mm, 4.5 mm, 5 mm, 5.5 mm, 6 mm, 6.8 mm, 7 mm, or 7.4 mm. When the barrier member 130 is an annular structure, the barrier member 130 has an inner annular surface and an outer annular surface, where the perimeter of the inner annular surface is less than the perimeter of the outer annular surface, the inner annular surface is the inner wall 131, and the outer annular surface is the outer wall 132. When the barrier member 130 is a non-annular structure, for example, the barrier member 130 is a square structure, in the direction (direction X) parallel to the first wall 121, a side wall of the barrier member 130 that has the closest distance to the weak portion 400 is the inner wall 131, and a side wall of the barrier member 130 that is arranged opposite the inner wall 131 is the outer wall 132. A distance L1 between the inner wall 131 and the outer wall 132 of the barrier member 130 along the direction (direction X) parallel to the first wall 121 is referred to as wall thickness, and since the barrier member 130 necessarily has a certain wall thickness, L1 cannot be equal to or less than 0. When L1 is greater than or equal to 7.5 mm, the barrier member 130 occupies a relatively large inner cavity space, and more materials are required to manufacture the barrier member 130. When 0<L1<7.5 mm, the barrier member 130 has a certain structural strength to better block the electrolyte.

In some embodiments, 0.5 mm≤L1≤2.5 mm. For example, L1 may be 0.5 mm, 0.8 mm, 1.2 mm, 1.6 mm, 1.9 mm, 2.1 mm, 2.3 mm, or 2.5 mm. When L1 is greater than or equal to 0.5 mm, the barrier member 130 can have sufficient structural strength, and thus has a stronger blocking effect on the electrolyte and is less prone to deformation. When L1 is less than or equal to 2.5 mm, relatively less material is required to manufacture the barrier member 130, making it easy to manufacture the barrier member 130.

In some embodiments, the barrier member 130 and the housing 100 may be separate structures, and after the barrier member 130 and the housing 100 are manufactured separately, the barrier member 130 is mounted on the housing 100. The barrier member 130 and the housing 100 may be made of the same material or may be made of different materials. The barrier member 130 and the housing 100 may be connected through bonding, welding, or the like.

In some embodiments, the barrier member 130 and the housing 100 are integrally molded. The barrier member 130 is integrally molded with the housing 100, which facilitates manufacturing. In one feasible embodiment, the barrier member 130 may be formed from remnants generated when the mounting hole 122 is punched into the housing 100. For example, a mold is provided in the interior of the housing 100, and the mold includes a cavity for forming the barrier member 130. When the mounting hole 122 is punched into the first wall 121 of the housing 100, the punching is carried out from the outer side of the first wall 121 inwardly, and the remnants from the punching is moved toward the inner cavity, and under the action of the mold, the barrier member 130 is formed in the inner cavity of the housing 100 and provided on the first wall 121. The barrier member 130 is provided in the peripheral zone of the mounting hole 122 in the first wall 121, and the barrier member 130 is integrally molded with the housing 100.

When the barrier member 130 is formed of remnants from punching the mounting hole 122 into the first wall 121, and when L1 is equal to or greater than 7.5 mm, there may be a case in which more material is required to form the barrier member 130 and there is no enough remnants, and thus 0<L1<7.5 mm.

As shown in FIG. 9, in some embodiments, the barrier member 130 has an inner wall 131 and an outer wall 132 in a direction (direction X) parallel to the first wall 121. The inner wall 131 is arranged close to the weak portion 400, and a distance between a hole wall of the second hole section 1222 and the inner wall 131 of the barrier member 130 in the direction (direction X) parallel to the first wall 121 is L2, where 0<L2<7.5 mm. For example, L2 may be 0.1 mm, 0.2 mm, 0.43 mm, 1 mm, 1.2 mm, 1.5 mm, 2 mm, 2.5 mm, 3 mm, 4 mm, 6 mm, 6.5 mm, 7 mm, or 7.4 mm.

In one arrangement, in the direction (direction X) parallel to the first wall 121, a distance between the inner wall 131 of the barrier member 130 and the weak portion 400 is greater than a distance between the hole wall of the second hole section 1222 and the weak portion 400. Since the inner wall 131 of the barrier member 130 is the side wall of the barrier member 130 that is closest to the weak portion 400, when L2 is equal to or greater than 7.5 mm, the barrier member 130 is relatively far from the weak portion 400, and if the barrier member 130 is a closed annular structure, the barrier member 130 occupies a relatively large space, and the barrier member 130 requires a relatively large amount of material to be manufactured. If the barrier member 130 is a non-closed annular structure, the barrier member 130 is farther away from the weak portion 400 and has a weaker protection effect on the weak portion 400.

In another arrangement, in the direction (direction X) parallel to the first wall 121, a distance between the inner wall 131 of the barrier member 130 and the weak portion 400 is less than a distance between the hole wall of the second hole section 1222 and the weak portion 400. If the dimension of the second hole section 1222 is set to a dimension suitable for mounting of the explosion-proof structure and the hole wall of the second hole section 1222 is used as a reference, when the distance between the inner wall 131 of the barrier member 130 and the hole wall of the second hole section 1222 is large, part of the barrier member 130 may be blocked on the side of the first hole section 1221 away from the second hole section 1222, which will affect the venting area after the explosion-proof structure opens the valve. If the barrier member 130 is provided to a zone that does not block the first hole section 1221 and the inner wall 131 of the barrier member 130 is used as a reference, when the distance between the inner wall 131 of the barrier member 130 and the hole wall of the second hole section 1222 is large, the bore diameter of the second hole section 1222 is relatively large, and excessive remnants will be generated during punching. The remnants will still have a redundancy after the barrier member 130 is formed, and the remnants have an undesirable effect on the molding of the housing 100.

In some embodiments, 1 mm≤L2≤4 mm. For example, L2 may be 1 mm, 1.1 mm, 2 mm, 2.6 mm, 3 mm, 3.5 mm, 3.8 mm, 3.9 mm, or 4 mm.

In one feasible embodiment, in the direction (direction X) parallel to the first wall 121, the distance between the hole wall of the first hole section 1221 and the inner wall 131 of the barrier member 130 is zero. Alternatively, in the direction (direction X) parallel to the first wall 121, the first hole section 1221 and the inner wall 131 of the barrier member 130 have the same cross-sectional shape and equal dimension. In this arrangement, the barrier member 130 does not block the first hole section 1221, which facilitates the formation of the first hole section 1221 and the barrier member 130 during punching.

As shown in FIG. 9 to FIG. 11, in some embodiments, the barrier member 130 has an inner wall 131 and an outer wall 132 in the direction (direction X) parallel to the first wall 121. The inner wall 131 is arranged close to the weak portion 400, and the outer wall 132 is arranged opposite the inner wall 131, and a distance between the hole wall of the second hole section 1222 and the outer wall 132 is L3.

If the hole wall of the second hole section 1222 is closer to the weak portion 400 (as shown in FIG. 9) with respect to the outer wall 132, 0<L3≤2.5 mm. For example, L3 may be 0.1 mm, 0.4 mm, 0.5 mm, 1 mm, 1.6 mm, 2.3 mm, or 2.5 mm. If the position of the inner wall 131 of the barrier member 130 remains unchanged, a larger L3 indicates a smaller bore diameter of the second hole section 1222 or a larger wall thickness of the barrier member 130, both of which are detrimental to the molding of the barrier member 130. When the barrier member 130 is formed from the remnants generated by punching the mounting hole 122, if the bore diameter of the second hole section 1222 is small or the wall thickness of the barrier member 130 is large, a case in which the remnants are not sufficient to manufacture the barrier member 130 may arise, and thus the distance between the bore diameter of the second hole section 1222 and the outer wall 132 of the barrier member 130 needs to be controlled such that the remnants generated by punching the mounting hole 122 are sufficient to manufacture the barrier member 130.

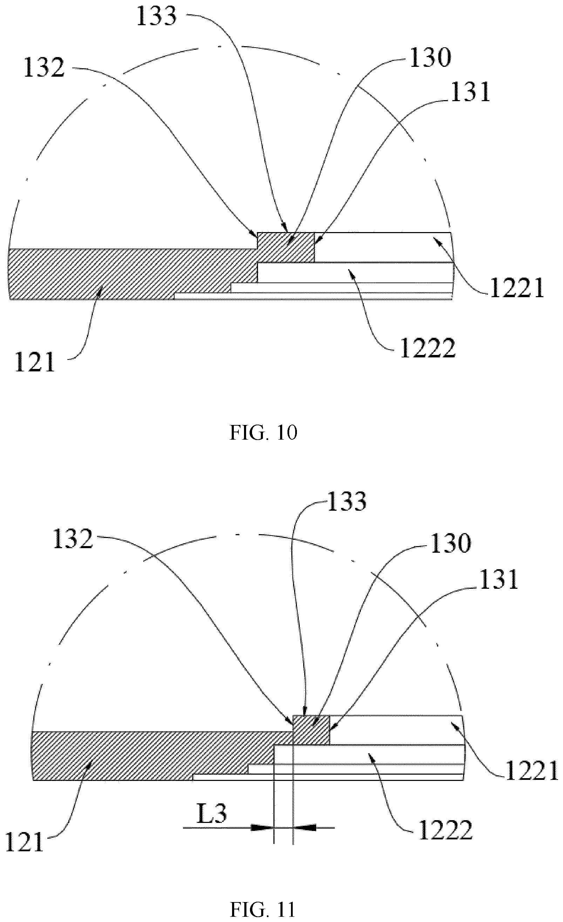

If a distance between the hole wall of the second hole section 1222 and the weak portion 400 is equal to a distance between the outer wall 132 and the weak portion 400 (as shown in FIG. 10), or if the hole wall of the second hole section 1222 is further from the weak portion 400 with respect to the outer wall 132 (as shown in FIG. 11), 0≤L3<5 mm. For example, L3 may be 0 mm, 0.5 mm, 0.8 mm, 1.2 mm, 1.6 mm, 1.8 mm, 2.2 mm, 2.6 mm, 3 mm, 3.5 mm, 4.3 mm, 4.7 mm, 4.9 mm, or 5 mm. When the distance between the hole wall of the second hole section 1222 and the weak portion 400 is equal to the distance between the outer wall 132 and the weak portion 400, L3 is 0. When the hole wall of the second hole section 1222 is farther away from the weak portion 400 with respect to the outer wall 132, and when the position of the inner wall 131 of the barrier member 130 remains unchanged, a larger L3 indicates a larger bore diameter of the second hole section 1222 or a smaller wall thickness of the barrier member 130, both of which are detrimental to the manufacturing of the housing 100. When the barrier member 130 is formed from the remnants generated by punching the mounting hole 122, if the bore diameter of the second hole section 1222 is too large or the wall thickness of the barrier member 130 is relative small, the remnants generated by punching the mounting hole 122 still have more redundancy after the manufacturing of the barrier member 130, and the redundancy of the remnants will have an undesirable effect on the molding of the housing 100. Therefore, when the hole wall of the second hole section 1222 is farther away from the weak portion 400 with respect to the outer wall 132, 0≤L3<5 mm. With L3 in such range, the remnants generated by punching the mounting hole 122 can be more rationally utilized, and the remnants can be reused while reducing the undesirable effect of the remnants on the molding of the housing 100.

In some embodiments, if the hole wall of the second hole section 1222 is closer to the weak portion 400 with respect to the outer wall 132, 0<L3<1 mm. For example, L3 may be 0.05 mm, 0.1 mm, 0.2 mm, 0.3 mm, 0.4 mm, 0.5 mm, 0.6 mm, 0.7 mm, 0.8 mm, 0.9 mm, or 1 mm.

If a distance between the hole wall of the second hole section 1222 and the weak portion 400 is equal to a distance between the outer wall 132 and the weak portion 400, or if the hole wall of the second hole section 1222 is further from the weak portion 400 with respect to the outer wall 132, 0≤L3≤2 mm. For example, L3 may be 0 mm, 0.4 mm, 0.6 mm, 0.8 mm, 1.2 mm, 1.3 mm, 1.5 mm, 1.7 mm, or 2 mm. In the range of 0≤L3≤2 mm, the remnants generated by punching the mounting hole 122 can be more rationally utilized, and the remnants can be reused while reducing the undesirable effect of the remnants on the molding of the housing 100.

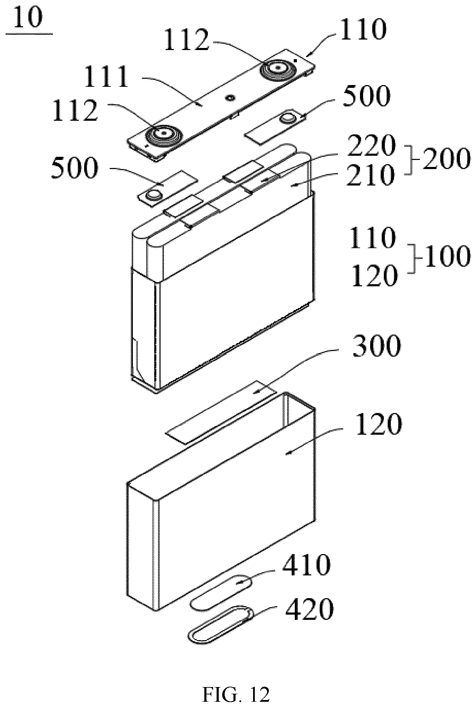

As shown in FIG. 12 to FIG. 15, in some embodiments, the battery cell 10 further includes a cover body 300. The cover body 300 is provided in the inner cavity, and the cover body 300 covers at least part of the weak portion 400 along the thickness direction (direction Y) of the first wall 121.

In this arrangement, the cover body 300 can block the electrolyte flowing along the thickness direction (direction Y) of the first wall 121 to at least part of the weak portion 400, and in the direction (direction X) parallel to the first wall 121, the barrier member 130 can block the electrolyte flowing from the barrier member 130 away from the weak portion 400 to the weak portion 400, and the cover body 300 and the barrier member 130 are arranged cooperatively, so as to provide better protection for the weak portion 400.

The cover body 300 is configured to cover at least part of the weak portion 400. Since the cover body 300 is mounted in the inner cavity, the cover body 300 covers the inner side of the weak portion 400, in other words, the cover body 300 separates the part of the weak portion 400 blocked by the cover body 300 from the electrolyte, such that the electrolyte can be prevented from coming into direct contact with the weak portion 400 blocked by the cover body 300, and the weak portion 400 can be protected to a certain extent.

The cover body 300 may be manufactured using an insulating material. For example, the cover body 300 may include a portion made of PET (PolyetH1ylene terepH1tH1alate, polyethylene terephthalate) material.

In some embodiments, the cover body 300 is connected to the barrier member 130 and/or the first wall 121. To be specific, the cover body 300 may be connected to only the first wall 121, or the cover body 300 may be connected to only the barrier member 130, or the cover body 300 may be connected to both the barrier member 130 and the first wall 121. In this arrangement, the cover body 300 is closer to the weak portion 400, and the cover body 300 occupies relatively less space in the inner cavity of the housing 100.

In some embodiments, the cover body 300 is connected to a surface of the barrier member 130 away from the first wall 121. In this arrangement, the cover body 300 is connected to the barrier member 130 with a certain zone such that electrolyte flowing from between the cover body 300 and the barrier member 130 to the weak portion 400 can be blocked.

When the barrier member 130 is an annular structure, the connection between the cover body 300 and a surface of the barrier member 130 away from the first wall 121 causes the cover body 300 to cover at least part of an opening of a chamber enclosed by the barrier member 130, so as to reduce or even avoid to a certain extent the electrolyte from flowing along the thickness direction (direction Y) of the first wall 121 via the opening of the chamber enclosed by the barrier member 130 to the weak portion 400.

In some embodiments, the cover body 300 covers the entire weak portion 400. In this arrangement, the cover body 300 can block more electrolyte flowing along the thickness direction (direction Y) of the first wall 121 to the weak portion 400, providing better protection for the weak portion 400.

When the barrier member 130 is an annular structure, the connection between the cover body 300 and a surface of the barrier member 130 away from the first wall 121 causes the cover body 300 to fully cover an opening of a chamber enclosed by the barrier member 130, so as to reduce or even avoid to a certain extent the electrolyte from flowing along the thickness direction (direction Y) of the first wall 121 via the opening of the chamber enclosed by the barrier member 130 to the weak portion 400.

In some embodiments, the weak portion 400 encloses a pressure relief zone, and the cover body 300 covers at least part of the pressure relief zone. Specifically, the weak portion 400 is in an annular shape, and a zone enclosed by the weak portion 400 is the pressure relief zone. The weak portion 400 may be in a closed annular shape, such as a circular annular shape or a rectangular annular shape, and fully encloses the pressure relief zone. When temperature or pressure in the battery cell 10 exceeds a threshold, part or the entire weak portion 400 breaks, causing the pressure relief zone to rise with respect to other zones of the first wall 121 or causing the pressure relief zone to separate from the first wall 121, so as to more quickly achieve pressure relief. Alternatively, the weak portion 400 may be annular with an opening, such as a C-shaped annular structure, and partially encloses the periphery of the pressure relief zone. When temperature or pressure in the battery cell 10 exceeds a threshold, part or the entire weak portion 400 breaks, causing the pressure relief zone to rise with respect to other zones of the first wall 121, so as to more quickly achieve pressure relief. In this arrangement, the cover body 300 has a relatively larger covering range and provides better protection for the weak portion 400.

When the weak portion 400 encloses the pressure relief zone, the barrier member 130 is provided not only in the outer zone of the weak portion 400, but also in the outer zone of the pressure relief zone.

In some embodiments, the cover body 300 blocks part of the weak portion 400, and the cover body 300 protects the part of the weak portion 400 that it blocks.

In some embodiments, the cover body 300 blocks the entire weak portion 400, and the cover body 300 better protects the weak portion 400.

In some embodiments, in addition to blocking at least part of the weak portion 400, the cover body 300 also blocks at least part of the pressure relief zone, such that the cover body 300 has a relative large blocking area, which is beneficial for the cover body 300 to better protect the weak portion 400.

For example, in some embodiments, the cover body 300 fully covers the weak portion 400 and the pressure relief zone, thereby better protecting the weak portion 400.

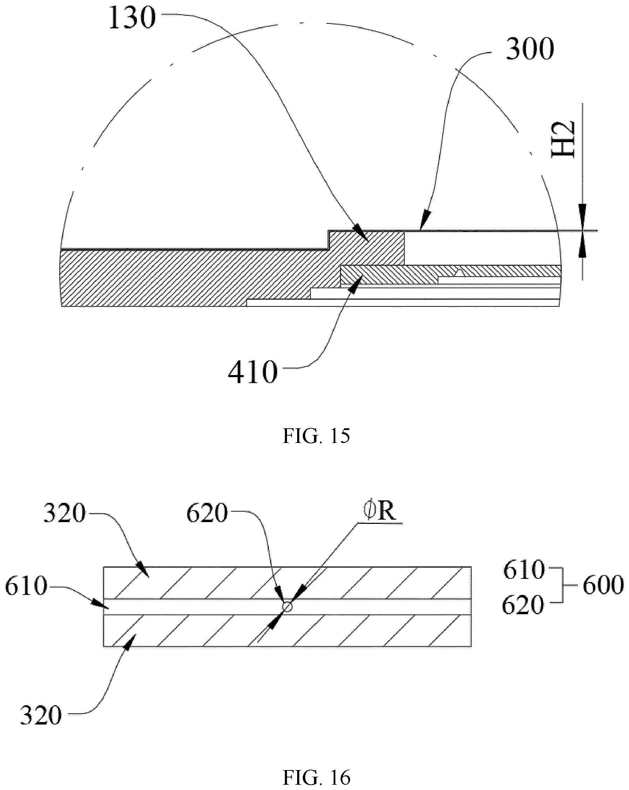

As shown in FIG. 16 to FIG. 18, in some embodiments, the cover body 300 includes a substrate portion 310 and a connection portion 320. The substrate portion 310 is connected to the barrier member 130 and/or the first wall 121 via the connection portion 320.

The substrate portion 310 is configured to block the weak portion 400, and the substrate portion 310 serves to separate the electrolyte from at least part of the weak portion 400. The substrate portion 310 may be made of PET material.

The connection portion 320 is configured to fix the substrate portion 310 to the barrier member 130 and/or the first wall 121. In an embodiment, the connection portion 320 at least partially encloses the weak portion 400, to be specific, at least part of the connection portion 320 is connected to the barrier member 130 and/or the first wall 121 provided on the outer side of the weak portion 400, to fix the substrate portion 310 in a zone opposite to the weak portion 400 along the thickness direction (direction Y) of the first wall 121. In this way, the substrate portion 310 is used to block and protect the weak portion 400.

In this arrangement, the connection portion 320 is configured to fix the substrate portion 310 to the barrier member 130 and/or the first wall 121, so as to facilitate the blocking of the weak portion 400 by the substrate portion 310.

In some embodiments, the first wall 121 has a recess, the weak portion 400 is provided on an inner wall of the recess, a gas passage 600 is arranged between the cover body 300 and the housing 100, and the gas passage 600 is communicated with the recess.

In one arrangement, the recess is provided on the inner side of the first wall 121, an indentation is provided on an inner wall of the recess to form the weak portion 400, and the recess is such provided that thickness of a zone of the first wall 121 provided with the weak portion 400 is reduced so as to achieve pressure relief through the weak portion 400.

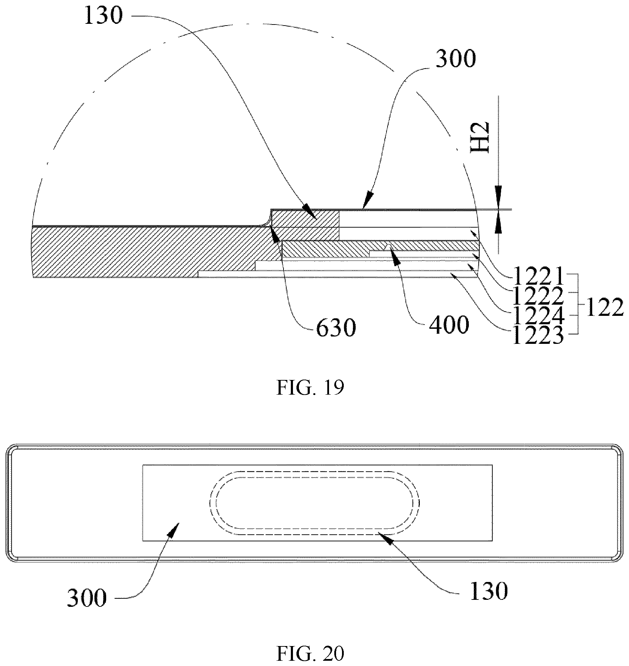

As shown in FIG. 19, in one arrangement, the battery cell 10 includes an explosion-proof structure, the weak portion 400 is provided in the explosion-proof structure, the mounting hole 122 is provided on the first wall 121, the mounting hole 122 includes a first hole section 1221 and a second hole section 1222, and the explosion-proof structure is mounted in the second hole section 1222, and the explosion-proof structure and a side wall of the first hole section 1221 form the recess.

When at least part of the cover body 300 covers the barrier member 130, the barrier member 130 is arranged between the weak portion 400 and the cover body 300, and thus the gas passage 600 may alternatively be arranged on the barrier member 130 or formed by the barrier member 130. For example, when the barrier member 130 is provided in plurality, the barrier members 130 can be spaced apart to increase a distance between a partial zone of the cover body 300 and the first wall 121, such that two adjacent barrier members 130, the cover body 300, and the first wall 121 enclose the gas passage 600. When the barrier member 130 is provided in one and the barrier member 130 is an annular structure with a notch, the notch of the barrier member 130 may form the gas passage 600. When the barrier member 130 is provided in one and the barrier member 130 is a closed annular structure, a depression may be provided on a side of the barrier member 130 facing the cover body 300, and the gas passage 600 is enclosed by the depression and the cover body 300.

In this arrangement, since the recess is provided on the first wall 121, after the recess is covered by the cover body 300, a cavity formed in the recess is separated from the inner cavity of the housing 100. If helium detection is carried out, the cavity formed in the recess becomes a sealed chamber, which is likely to lead to a low accuracy of the helium detection result. The gas passage 600 is arranged between the cover body 300 and the housing 100, and the gas passage 600 causes the cavity in the recess to be communicated with the inner cavity of the housing 100, thereby improving the accuracy of the helium detection result.

In some embodiments, the first wall 121 has a recess, the weak portion 400 is provided on an inner wall of the recess, a gas passage 600 is arranged on the cover body 300 and/or the housing 100, and the gas passage 600 is communicated with the recess. To be specific, the gas passage 600 may be provided on only the cover body 300, the gas passage 600 may be provided on only the housing 100, or the gas passage 600 may be provided separately on the cover body 300 and the housing 100. In this arrangement, when the cover body 300 and/or the housing 100 are manufactured, the gas passage 600 is manufactured simultaneously, which improves the manufacturing efficiency.

As shown in FIG. 16, in some embodiments, the gas passage 600 includes a first passage 610, and the cover body 300 includes a substrate portion 310 and a plurality of connection portions 320 spaced apart on the substrate portion 310, where the first passage 610 is formed between adjacent ones of the connection portions 320. For example, the connection portion 320 is an adhesive layer, and one side of the adhesive layer is affixed to the substrate portion 310 and the other side is affixed to the first wall 121 and/or the barrier member 130, such that an adhesive-free zone is formed between the adjacent adhesive layers, and the adhesive-free zone allows gas to pass through, thereby forming the first passage 610.

In this arrangement, the first passage 610 is arranged on the cover body 300, and the first passage 610 is enclosed by adjacent connection portions 320 in the cover body 300. This arrangement of the first passage 610 does not need to add a structure to the cover body 300 and does not need to increase the manufacturing process, and the first passage 610 can be formed on the cover body 300 only by adjusting the arrangement positions of the connection portions 320 on the cover body 300.

The shape of the first passage 610 is related to the shape of the adhesive-free zone, and the shape of the adhesive-free zone is related to the shape, number, and arrangement positions of the connection portions 320. The first passage 610 may be provided with one, two, or more openings.

In some embodiments, the number of openings of the first passage 610 is one, the number of connection portions 320 is two. The two connection portions 320 are connected to two sides of the substrate portion 310, respectively, one ends of the two connection portions 320 are connected, one ends of the two connection portions 320 are spaced apart, and an opening of the first passage 610 is formed between the spaced-apart ends of the two connection portions 320. Gas in the inner cavity of the housing 100 may enter the first passage 610 through the opening and enter the recess through the first passage 610, and gas in the recess may flow to the inner cavity of the housing 100 through the opening of the first passage 610, thereby achieving communication between the recess and the inner cavity of the housing 100.

In some embodiments, the first passage 610 has at least two openings, where the openings are used for communication with the inner cavity of the housing 100. An increase in the number of openings results in an increase in connections between the recess and the inner cavity of the housing 100. If one of the openings is closed due to an external factor (for example, erosion of the electrolyte), the communication between the recess and the inner cavity of the housing 100 can also be realized through another opening.

In addition, the two connection portions 320 spaced apart on the substrate portion 310 and the substrate portion 310 can enclose the first passage 610 having two openings, and the first passage 610 can be manufactured in a simple and convenient manner.

As shown in FIG. 15 and FIG. 19, in some embodiments, the thickness H2 of the cover body 300 is greater than or equal to 0.01 mm, and the thickness H2 of the cover body 300 is less than or equal to 0.2 mm.

The thickness of the cover body 300 is a dimension of the cover body 300 in the thickness direction of the first wall 121. When the cover body 300 includes a substrate portion 310 and a connection portion 320, and the connection portion 320 is provided in a partial zone of the substrate portion 310 facing the first wall 121, in a zone where the substrate portion 310 is provided with the connection portion 320, the thickness of the cover body 300 is the sum of the thickness of the substrate portion 310 and the thickness of the connection portion 320. In the zone where the substrate portion 310 is provided with no connection portion 320, the thickness of the cover body 300 is the thickness of the substrate portion 310.

The thickness of the cover body 300 is set to be greater than or equal to 0.01 mm, such that the cover body 300 has sufficient structural strength to separate the electrolyte from the weak portion 400, thereby providing better protection for the weak portion 400. The thickness of the cover body 300 is set to be less than or equal to 0.2 mm, within which the cover body 300 has sufficient structural strength, and out of which the cover body 300 has structural redundancy and occupies more space in the inner cavity.

In some embodiments, the first passage 610 runs through the cover body 300 along a direction (direction X) parallel to the first wall 121.

In this arrangement, the first passage 610 extends along a straight line for ease of manufacturing. A rectangular sheet-shaped substrate portion 310 and two rectangular sheet-shaped connection portions 320 are used, and the two rectangular sheet-shaped connection portions 320 are spaced apart on the substrate portion 310, such that the first passage 610, which is parallel to the first wall 121, is formed between the two connection portions 320. The rectangular connection portion 320 is more easily manufactured. If the connection portion 320 is an adhesive tape, the process of cutting the adhesive tape into rectangles is convenient and efficient; and if the connection portion 320 is a glue solution, the rectangular connection portion 320 can be formed on the substrate portion 310 by applying the glue solution on the substrate portion 310 along a straight line. This process is simple to operate.

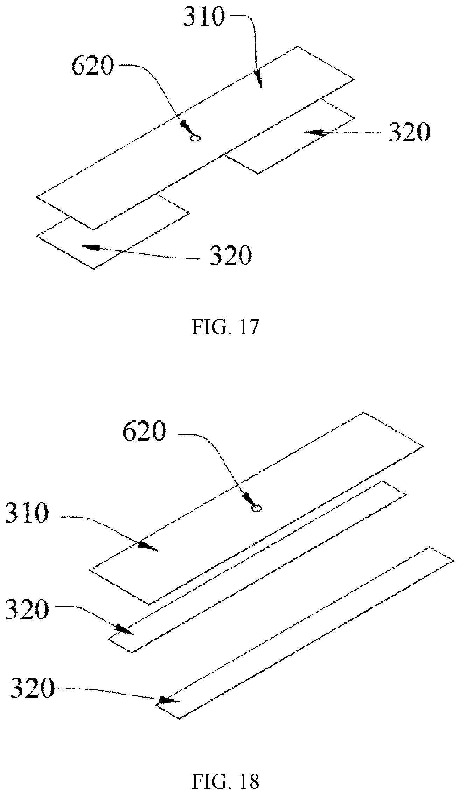

The first passage 610 is parallel to the first wall 121. For example, the extension direction of the first passage 610 may be parallel to the width direction of the battery cell 10 (as shown in FIG. 17). Alternatively, the extension direction of the first passage 610 may be parallel to the length direction of the battery cell 10 (as shown in FIG. 16 and FIG. 18). Alternatively, the extension direction of the first passage 610 may alternatively be inclined with the length direction of the battery cell 10.

As shown in FIG. 16 to FIG. 18, in some embodiments, the gas passage 600 includes a second passage 620. The second passage 620 runs through the cover body 300 in a thickness direction of the cover body 300, and a projection of the second passage 620 on the first wall 121 falls outside the weak portion 400.

In this arrangement, the second passage 620 is arranged on the cover body 300 and is formed by a ventilation hole penetrating the cover body 300. In this arrangement, the second passage 620 is arranged on the cover body 300 and is formed by a ventilation hole penetrating the cover body 300. In this arrangement, the second passage 620 is less likely to be blocked by other structures inside the housing 100, thereby facilitating continuous communication between the recess and the inner cavity of the housing 100.

As shown in FIG. 16, in some embodiments, the bore diameter of the second passage 620 is R, where 0.1 mm≤R≤10 mm. In the range of the bore diameter of the ventilation hole, the second passage 620 can be such arranged that the cover body 300 has a certain structural strength to block the weak portion 400 and also to meet the need for communication between the recess and the inner cavity of the housing 100. When the bore diameter of the second passage 620 is less than or equal to 10 mm, the cover body 300 can satisfy the need for blocking the weak portion 400, and the dimension of the second passage 620 is not sufficient for the electrolyte to enter into the recess.

In some embodiments, the barrier member 130 is a closed annular structure, and part of the cover body 300 is connected to a side wall of the barrier member 130 away from the first wall 121 (the side wall of the barrier member 130 away from the first wall 121 will hereinafter be referred to as the top wall 133 for short), and part of the cover body 300 is connected to the first wall 121. In the thickness direction (direction Y) of the first wall 121, the cover body 300 fully blocks the barrier member 130, and the cover body 300 covers part of the first wall 121. The zone of the cover body 300 between a connection to the first wall 121 and a connection to the top wall 133 of the barrier member 130 may be connected to the outer wall 132 of the barrier member 130. Alternatively, the cover body 300 is provided with the first passage 610, and a zone of the cover body 300 between a connection to the first wall 121 and a connection to the top wall 133 of the barrier member 130 may form a third passage 630, to be specific, the cover body 300, the first wall 121, and the barrier member 130 enclose the third passage 630. The third passage 630 is connected to the first passage 610 and connected to the recess via the first passage 610.

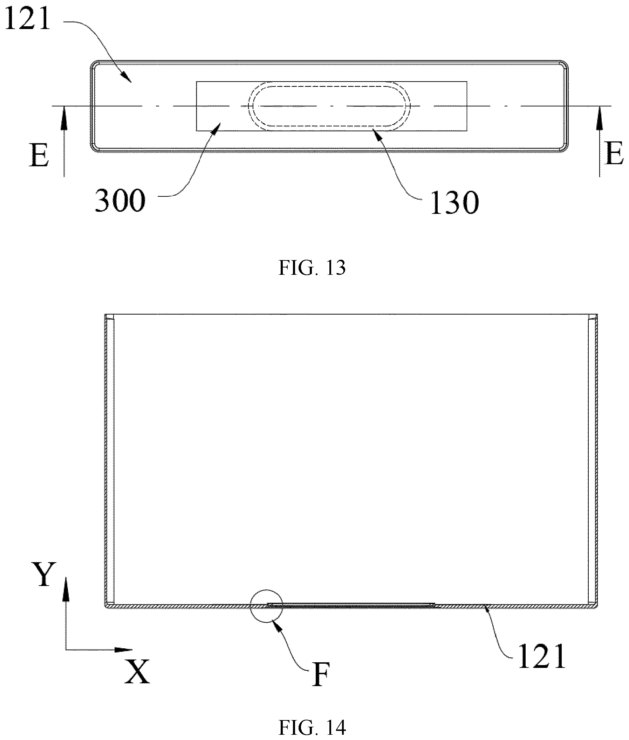

When the housing 100 is a rectangular structure, the length direction of the weak portion 400 is the same as the length direction of the first wall 121, and the barrier member 130 may be a waist-shaped structure with the same length direction as the first wall 121. The cover body 300 may be a square structure, and the length direction of the cover body 300 is the same as the length direction of the first wall 121. Along the length direction of the first wall 121, the dimension of the cover body 300 is larger than the dimension of the outer wall 132 of the barrier member 130. Such arrangement is convenient for the cover body 300 to be connected to the first wall 121. Along the width direction of the first wall 121, the dimension of the cover body 300 is equal to the dimension of the outer wall 132 of the barrier member 130 (as shown in FIG. 13), or the dimension of the cover body 300 is slightly larger than the dimension of the outer wall 132 of the barrier member 130 (as shown in FIG. 20). Since the width of the first wall 121 is relatively small, the dimension of the cover body 300 being equal to the dimension of the outer wall 132 of the barrier member 130 can reduce the space occupied by the cover body 300 in the width direction. The dimension of the cover body 300 being slightly larger than the size of the outer wall 132 of the barrier member 130 can provide a relatively larger contact area between the cover body 300 and the top wall 133 of the barrier member 130, and can enhance the strength of the connection between the cover body 300 and the top wall 133 of the barrier member 130.

In some embodiments, a cell assembly 200 is accommodated in the housing 100, and the first wall 121 is arranged below the cell assembly 200.

The first wall 121 is arranged below the cell assembly 200 and includes at least the following arrangement:

The housing 100 includes an end cover plate 111 and a shell 120. The end cover plate 111 covers the opening of the shell 120, and the first wall 121 is provided on the end cover plate 111, which means that when the weak portion 400 is provided on the end cover plate 111, the battery cell 10 is in a working position, and the end cover plate 111 is located below the battery cell assembly 200 (to be specific, the battery cell 10 is inverted after mounting). In such a case, the free electrolyte generated in the battery cell 10 during use moves downwardly to the end cover plate 111 under the effect of gravity, and since the barrier member 130 is provided in at least part of the peripheral zone of the weak portion 400, the barrier member 130 blocks the electrolyte from flowing along the direction (direction X) parallel to the first wall 121 to the weak portion 400. When the battery cell 10 includes the cover body 300, the cover body 300 covers the weak portion 400 such that at least part of the weak portion 400 may be covered to avoid the electrolyte flowing from top to bottom to the weak portion 400.

Alternatively, the first wall 121 is a side of the shell 120 opposite the end cover plate 111, if a side of the shell 120 provided with the end cover plate 111 is served as the top, the first wall 121 is a bottom wall of the shell 120. During use of the battery cell 10, the end cover plate 111 is located at the top of the battery cell 10 and the first wall 121 is located at the bottom of the battery cell 10. In such a case, the free electrolyte generated in the battery cell 10 during injection or use moves downwardly to the first wall 121 under the effect of gravity, and since the barrier member 130 is provided in at least part of the peripheral zone of the weak portion 400, the barrier member 130 blocks the electrolyte from flowing along the direction (direction X) parallel to the first wall 121 to the weak portion 400. When the battery cell 10 includes the cover body 300, the cover body 300 covers the weak portion 400 such that at least part of the weak portion 400 may be covered to avoid the electrolyte flowing from top to bottom to the weak portion 400.

In addition, the first wall 121 may also be provided on a side wall on the shell 120 other than the side opposite the end cover plate 111.

A second aspect of the embodiments of this application provides a battery including the battery cell 10 according to the foregoing embodiments.

The battery includes a box and a battery cell 10, where the battery cell 10 is accommodated in the box. The box is configured to provide an accommodating space for the battery cell 10, and the box may be of various structures.

In the battery, the battery cell 10 may be provided in plurality, and the plurality of battery cells 10 may be connected in series, parallel, or series-parallel, where being connected in series-parallel means a combination of series-parallel connections of the plurality of battery cells 10. The plurality of battery cells 10 may be directly connected in series, parallel, or series-parallel, and an entirety constituted by the plurality of battery cells 10 is accommodated in the box. Certainly, the plurality of battery cells 10 may first be connected in series, parallel, or series-parallel to constitute a battery module, and then a plurality of battery modules are connected in series, parallel, or series-parallel to constitute a whole, and accommodated in the box. The battery may further include other structures. For example, the battery may further include a busbar configured to implement electrical connection between the plurality of battery cells 10.

Each battery cell 10 may be a secondary battery or a primary battery, and may be a lithium-sulfur battery, a sodium-ion battery, or a magnesium-ion battery, without being limited thereto. The battery cell 10 may be cylindrical, flat, cuboid, or of other shapes.

A third aspect of the embodiments of this application provides an electric apparatus including the battery in the foregoing embodiment, where the battery is configured to supply electrical energy.

Because the electric apparatus includes the foregoing battery, it includes at least all of the beneficial effects of the battery, which will not be repeated herein.

The electric apparatus may be but is not limited to a mobile phone, a tablet computer, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle is used as an example for description of the following embodiments. The vehicle may be a fossil fuel vehicle, a natural-gas vehicle, or a new energy vehicle. The new energy vehicle may be a battery electric vehicle, a hybrid electric vehicle, a range-extended electric vehicle, or the like. The vehicle is provided with a battery inside, where the battery may be arranged at the bottom, front or rear of the vehicle. The battery may be configured to supply power to the vehicle. For example, the battery may be used as an operational power supply for the vehicle. The vehicle may further include a controller and a motor, where the controller is configured to control the battery to supply power to the motor, for example, to satisfy power needs of start, navigation, and driving of the vehicle.

In some embodiments of this application, the battery can be used as not only the operational power source for the vehicle but also a driving power source for the vehicle, replacing all or part of the fossil fuel or the natural gas to provide driving power for the vehicle.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1. A battery cell, **characterized by** comprising:

   a housing, wherein the housing has an inner cavity, the housing has a first wall, and a weak portion is provided on the first wall; and
   a barrier member, wherein the barrier member is located in the inner cavity, and the barrier member is provided on at least part of the periphery of the weak portion.

2. The battery cell according to claim 1, **characterized in that** the barrier member is a closed annular structure.

3. The battery cell according to claim 1, **characterized in that** the battery cell comprises an explosion-proof structure, wherein the weak portion is provided in the explosion-proof structure, the first wall has a mounting hole, the explosion-proof structure is mounted in the mounting hole, and the barrier member is provided at an edge of the mounting hole.

4. The battery cell according to claim 3, **characterized in that** the mounting hole comprises a first hole section and a second hole section, wherein the first hole section is connected to a side of the second hole section closer to the inner cavity, a bore diameter of the first hole section is less than a bore diameter of the second hole section, the explosion-proof structure is mounted in the second hole section, and the barrier member is provided at an edge of the first hole section.

5. The battery cell according to claim 4, **characterized in that** the explosion-proof structure comprises a valve sheet and a protection sheet, and the mounting hole further comprises a third hole section, wherein the third hole section is connected to a side of the second hole section away from the inner cavity, a bore diameter of the third hole section is greater than the bore diameter of the second hole section, the valve sheet is mounted to the second hole section, and the protection sheet is mounted to the third hole section.

6. The battery cell according to claim 5, **characterized in that** the mounting hole further comprises a fourth hole section, wherein the fourth hole section is arranged between the second hole section and the third hole section, a bore diameter of the fourth hole section is greater than the bore diameter of the second hole section, and the bore diameter of the fourth hole section is less than the bore diameter of the third hole section.

7. The battery cell according to any one of claims 1 to 6, **characterized in that** the barrier member has a thickness of H1, wherein 0<H1<0.5 mm.

8. The battery cell according to claim 7, **characterized in that**

$$0.1 \text{ mm} \leq H1 \leq 0.3 \text{ mm}.$$

9. The battery cell according to any one of claims 1 to 8, **characterized in that** the barrier member has an inner wall and an outer wall in a direction parallel to the first wall, wherein the inner wall is arranged close to the weak portion, the outer wall is arranged opposite the inner wall, and a distance between the inner wall and the outer wall is L1, wherein 0<L1<7.5 mm.

10. The battery cell according to claim 9, **characterized in that**

$$0.5 \text{ mm} \leq L1 \leq 2.5 \text{ mm}.$$

11. The battery cell according to any one of claims 4 to 6, **characterized in that** the barrier member and the housing are integrally molded.

12. The battery cell according to claim 11, **characterized in that** the barrier member has an inner wall and an outer wall in a direction parallel to the first wall, wherein the inner wall is arranged close to the weak portion, and a distance between a hole wall of the second hole section and the inner wall of the barrier member in the direction parallel to the first wall is L2, wherein 0<L2<7.5 mm

13. The battery cell according to claim 12, **characterized in that**

$$1 \text{ mm} \leq L2 \leq 4 \text{ mm}.$$

14. The battery cell according to claim 11, **characterized in that** the barrier member has an inner wall and an outer wall in a direction parallel to the first wall, wherein the inner wall is arranged close to the weak portion, the outer wall is arranged opposite the inner wall, and a distance between a hole wall of the second hole section and the outer wall is L3; wherein

    if the hole wall of the second hole section is arranged closer to the weak portion with respect to the outer wall, 0<L3≤2.5 mm; and
    if a distance between the hole wall of the second hole section and the weak portion is equal to a distance between the outer wall and the weak portion, or if the hole wall of the second hole section is arranged farther away from the weak portion with respect to the outer wall, 0≤L3<5 mm.

15. The battery cell according to claim 14, **characterized in that** if the hole wall of the second hole section is arranged closer to the weak portion with respect to the outer wall, 0<L3≤1 mm; and
if a distance between the hole wall of the second hole section and the weak portion is equal to a distance between the outer wall and the weak portion, or if the hole wall of the second hole section is arranged farther away from the weak portion with respect to the outer wall, 0≤L3≤2 mm.

16. The battery cell according to any one of claims 1 to 15, **characterized in that** the battery cell further comprises a cover body, wherein the cover body is provided in the inner cavity, and the cover body covers at least part of the weak portion along a thickness direction of the first wall.

17. The battery cell according to claim 16, **characterized in that** the cover body is connected to the barrier member and/or the first wall.

18. The battery cell according to claim 17, **characterized in that** the cover body is connected to a surface of the barrier member away from the first wall.

19. The battery cell according to any one of claims 16 to 18, **characterized in that** the cover body covers the entire weak portion.

20. The battery cell according to any one of claims 16 to 19, **characterized in that** the weak portion encloses a pressure relief zone, and the cover body covers at least part of the pressure relief zone.

21. The battery cell according to any one of claims 17 to 20, **characterized in that** the cover body comprises a substrate portion and a connection portion, wherein the substrate portion is connected to the barrier member and/or the first wall via the connection portion.

22. The battery cell according to any one of claims 16 to 21, **characterized in that** the first wall has a recess, wherein the weak portion is provided on an inner wall of the recess, a gas passage is arranged between the cover body and the housing, and the gas passage is connected to the recess.

23. The battery cell according to any one of claims 16 to 21, **characterized in that** the first wall has a recess, wherein the weak portion is provided on an inner wall of the recess, a gas passage is arranged on the cover body and/or the housing, and the gas passage is connected to the recess.

24. The battery cell according to claim 23, **characterized in that** the gas passage comprises a first passage, and the cover body comprises a substrate portion and a plurality of connection portions spaced apart on the substrate portion, wherein the first passage is formed between adjacent ones of the connection portions.

25. The battery cell according to claim 23 or 24, **characterized in that** the gas passage comprises a second passage, wherein the second passage runs through the cover body in a thickness direction of the cover body, and a projection of the second passage on the first wall falls outside the weak portion.

26. The battery cell according to any one of claims 1 to 25, **characterized in that** a cell assembly is accommodated in the housing and the first wall is arranged below the cell assembly.

27. The battery cell according to claim 26, **characterized in that** the housing comprises a shell and an end cover plate, wherein the end cover plate covers an opening of the shell, and the first wall is arranged on the end cover plate.

28. The battery cell according to claim 26, **characterized in that** the housing comprises a shell and an end cover plate, wherein the end cover plate covers an opening of the shell, and the first wall is arranged on the shell.

29. A battery, **characterized by** comprising the battery cell according to any one of claims 1 to 28.

30. An electric apparatus, **characterized by** comprising the battery according to claim 29, wherein the battery is configured to supply electrical energy.

10

112 — 110

111

112

500

500 — 220 ⎤ 200
210 ⎦

110 ⎤ 100
120 ⎦

120

410

420

FIG. 1

A ⟶                                        ⟵ A

121                          400

FIG. 2

FIG. 3

FIG. 4

130    130    121

FIG. 5

130    121

FIG. 6

L1    L1

C    C

121    130

FIG. 7

Y

X

D

121

FIG. 8

L2

130

131

132

H1

121

1221
1222
1224
1223

122

L3

FIG. 9

FIG. 10

FIG. 11

FIG. 12

121

300    130

FIG. 13

Y

X    F

121

FIG. 14

130

300

H2

410

FIG. 15

320

620

ØR

610

610
620 } 600

320

FIG. 16

FIG. 17

FIG. 18

FIG. 19

FIG. 20

## INTERNATIONAL SEARCH REPORT

| International application No. |
| --- |
| **PCT/CN2023/073104** |

### A. CLASSIFICATION OF SUBJECT MATTER

H01M50/588(2021.01)i; H01M50/593(2021.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, WPABSC, ENTXTC, VEN, CNKI: 凸, 突, 挡, 阻, 缓, 保护, 安全, 防爆, 泄压, 泄气, 排气, 通气, 内腔, protrude, project, protect, buffer, safe, relieve+, exhaust, relief, releas+, vent+, inside

### C. DOCUMENTS CONSIDERED TO BE RELEVANT

| Category* | Citation of document, with indication, where appropriate, of the relevant passages | Relevant to claim No. |
| --- | --- | --- |
| X | CN 217788703 U (BYD CO., LTD.) 11 November 2022 (2022-11-11) description, paragraphs 42-101, and figures 1-3 | 1-30 |
| X | CN 107394063 A (CONTEMPORARY AMPEREX TECHNOLOGY CO., LTD.) 24 November 2017 (2017-11-24) description, paragraphs 34-51, and figures 1-17 | 1-30 |
| A | CN 112736363 A (JIANGSU CONTEMPORARY AMPEREX TECHNOLOGY LIMITED) 30 April 2021 (2021-04-30) entire document | 1-30 |
| A | CN 215816076 U (XIAMEN HITHIUM NEW ENERGY TECHNOLOGY CO., LTD.) 11 February 2022 (2022-02-11) entire document | 1-30 |
| A | US 2019221804 A1 (SAMSUNG SDI CO., LTD.) 18 July 2019 (2019-07-18) entire document | 1-30 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 August 2023** | **16 August 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT

Information on patent family members

International application No.

**PCT/CN2023/073104**

| Patent document cited in search report | | | Publication date (day/month/year) | Patent family member(s) | | | Publication date (day/month/year) |
|---|---|---|---|---|---|---|---|
| CN | 217788703 | U | 11 November 2022 | None | | | |
| CN | 107394063 | A | 24 November 2017 | EP | 3246967 | A1 | 22 November 2017 |
| | | | | EP | 3246967 | B1 | 24 April 2019 |
| | | | | US | 2017331090 | A1 | 16 November 2017 |
| | | | | US | 10714721 | B2 | 14 July 2020 |
| CN | 112736363 | A | 30 April 2021 | None | | | |
| CN | 215816076 | U | 11 February 2022 | None | | | |
| US | 2019221804 | A1 | 18 July 2019 | EP | 3518313 | A1 | 31 July 2019 |
| | | | | EP | 3518313 | A4 | 19 February 2020 |
| | | | | WO | 2018056630 | A1 | 29 March 2018 |
| | | | | KR | 20180032020 | A | 29 March 2018 |
| | | | | KR | 102283788 | B1 | 30 July 2021 |
| | | | | US | 11276899 | B2 | 15 March 2022 |

Form PCT/ISA/210 (patent family annex) (July 2022)